# EUROPEAN PATENT APPLICATION

(11) **EP 4 838 676 A1**
(43) Date of publication of application: **11.11.2026**
(21) Application number: 25782835.0
(22) Date of filing: 25.03.2025
(51) Int. Cl.: H01M 50/502, H01M 50/24, H01M 50/507, H01M 50/521, H01M 50/503, H01M 10/6568, H01M 10/613, H01M 50/593, H01M 50/242, H01M 10/6567

(54) **BATTERY CELL ASSEMBLY AND BATTERY PACK INCLUDING SAME**

(30) Priority: 04.04.2024 KR 20240045811; 20.03.2025 KR 20250035933
(71) Applicant: LG Energy Solution, Ltd., Seoul 07335 (KR)
(72) Inventor: LEE, Jung Hoon, Daejeon 34122 (KR); UM, Taeki, Daejeon 34122 (KR)
(74) Representative: Plasseraud IP
(86) International application number: PCT/KR2025/003771
(87) International publication number: WO 2025/211632

(57) **Abstract**

A battery cell assembly according to certain aspects of the present disclosure comprises: a sub-assembly including a battery cell stack formed by stacking a plurality of battery cells; a frame member that houses the sub-assembly; an inter-busbar that is electrically connected to the battery cells included in the sub-assembly; a terminal member including one end where a screw thread is formed; a frame hole that is formed on at least one side surface of the frame member; and a terminal busbar assembly that covers the frame hole and is connected to the terminal member, wherein the inter-busbar is formed with an inter-busbar hole, and one end of the terminal member is coupled to the inter-busbar hole through the frame hole.

## Description

### [TECHNICAL FIELD]

### Cross-Reference to Related Application(s)

This application claims priority to and the benefit of Korean Patent Application no. KR10-2024-0045811, filed on April 4, 2024, and Korean Patent Application no. KR10-2025-0035933, filed on March 20, 2025, the entire contents of which are incorporated herein by reference.

The present disclosure relates to a battery cell assembly and a battery pack including the same, and more particularly, to a battery cell assembly including an HV (High Voltage) electrical connecting structure improved in cooling efficiency and safety and having sealing performance from an external environment, and a battery pack including the same.

### [BACKGROUND ART]

As mobile devices have been increasingly developed, and the demand for such mobile devices has increased, the demand for secondary batteries as energy sources is also rapidly increasing. Accordingly, much research on secondary batteries capable of satisfying various needs has been carried out.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, with a continuous rise of the necessity for a large-capacity secondary battery structure, including the utilization of the secondary battery as an energy storage source, there is a growing demand for a battery pack of a medium or large-sized module structure which is an assembly of battery modules in which a plurality of secondary batteries are connected in series/parallel.

Meanwhile, when a plurality of battery cells are connected in series/parallel to configure a battery pack, it is common to configure a battery module composed of at least one battery cell first and then configure a battery pack by using at least one battery module and adding other components.

Since battery cells constituting such a medium or large-sized battery module are composed of secondary batteries capable of charging and discharging, such a high-output large-capacity secondary battery generates a large amount of heat in a charge and discharge process. In this case, heat generated from the large number of battery cells is added up in a narrow space, so that the temperature can rise more quickly and excessively. In other words, a battery module in which a large number of battery cells are stacked, and a battery pack equipped with such battery modules can obtain high output, but it is not easy to remove heat generated from the battery cells during charge and discharge. When the heat dissipation of the battery cells is not properly performed, deterioration of the battery cells is accelerated, the lifespan is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since a plurality of battery modules are concentratedly disposed to increase the mileage of the vehicle, the flame or heat generated in one battery module can easily propagate to an adjacent battery module, which may eventually lead to ignition or explosion of the battery pack itself.

Furthermore, since the battery pack consists of a structure in which a plurality of battery modules are combined, it is heavy and unsuitable for loading a plurality of batteries into transportation means such as an automobile, and therefore it is necessary to improve the energy density.

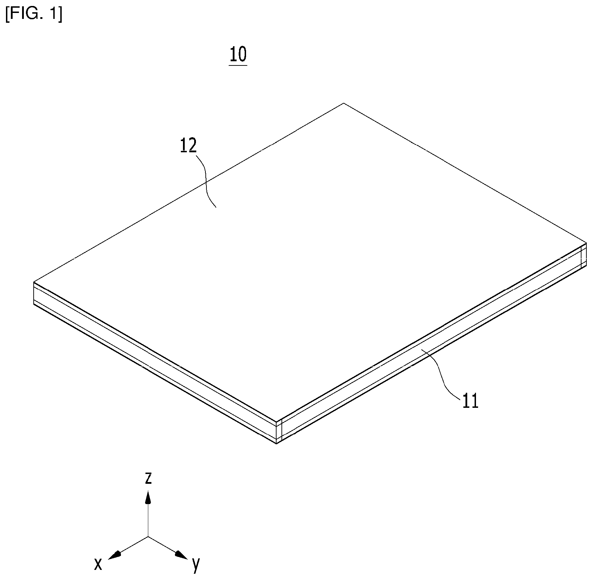

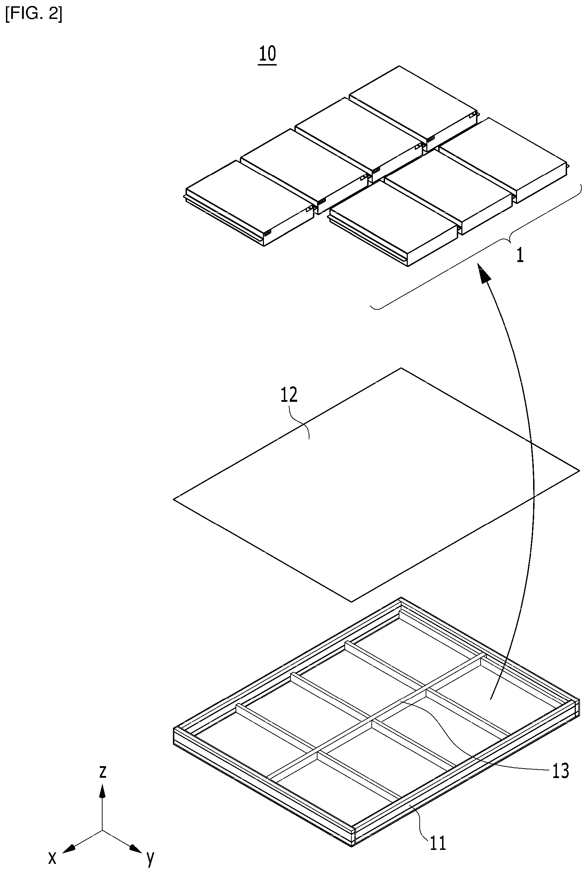

FIG. 1 is a perspective view showing a conventional battery pack. FIG. 2 is an exploded perspective view of the battery pack of FIG. 1.

Referring to FIGS. 1 and 2, a conventional battery pack 10 includes a lower pack frame 11 on which a plurality of battery modules 1 are mounted, an upper pack frame 12 located in an upper part of the battery modules 1, and an internal beam 13 that partitions the position where the battery modules 1 are mounted within the battery pack 10.

In this way, when a battery module 1 is mounted in a battery pack 10, the energy density of the battery pack 10 decreases due to the internal beam 13 that partitions between the battery modules 1, which causes a problem that more battery packs 10 must be provided in order to satisfy the efficiency required for the device or the like. Furthermore, due to the weight of the battery pack 10, there is a limit to the number of battery packs 10 that can be provided in a device. Therefore, in order to reduce the weight of the battery pack 10 and at the same time, increase the energy density of the battery pack 10, there is a need to mount more battery modules 1 in the battery pack 10.

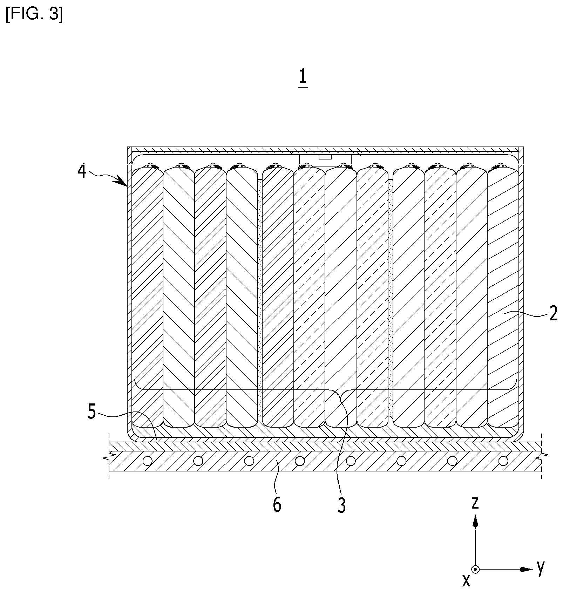

FIG. 3 is a cross-sectional view showing a cross section of one of the battery modules included in the battery pack of FIG. 2.

Referring to FIG. 3, a conventional battery module 1 includes a battery cell stack 3 including battery cells 2 stacked in a preset direction, and a module frame 4 that houses the battery cell stack 3, wherein the battery cell stack 3 is fixedly located on a thermally conductive resin layer 5 located on a lower surface of the module frame 4. In this case, a heat sink 6 located under the bottom part of the module frame 4 may be provided to cool heat generated from the battery cell stack 3.

However, since the heat sink 6 does not receive transfer of heat while being in direct contact with the battery cell stack 3, there is a disadvantage in that the cooling efficiency is not very high. In particular, an air gap may be formed between the bottom part of the module frame 4 and the thermally conductive resin layer 5, which becomes a factor that obstructs heat transfer. Thus, there is a need to develop a method for more effectively cooling the battery module 1.

Putting the above contents together, there is a need to develop a more effective method for improving the cooling efficiency of a battery module.

### [DETAILED DESCRIPTION OF THE INVENTION]

### [Technical Problem]

It is an object of the present disclosure to provide a battery cell assembly including an HV (High Voltage) electrical connecting structure improved in cooling efficiency and thus enhanced in cooling performance and having sealing performance from an external environment, and a battery pack including the same.

The technical objects to be solved by embodiments of the present disclosure are not limited to the above-described objects, and other objects which are not mentioned herein should be clearly understood by those skilled in the art from the following detailed description and the accompanying drawing.

### [Technical Solution]

According to certain aspects of the present disclosure, there is provided a battery cell assembly comprising: a sub-assembly including a battery cell stack formed by stacking a plurality of battery cells; a frame member that houses the sub-assembly; an inter-busbar that is electrically connected to the battery cells included in the sub-assembly; a terminal member including one end where a screw thread is formed; a frame hole that is formed on at least one side surface of the frame member; and a terminal busbar assembly that covers the frame hole and is connected to the terminal member, wherein the inter-busbar is formed with an inter-busbar hole, and one end of the terminal member is coupled to the inter-busbar hole through the frame hole.

The terminal busbar assembly comprises a terminal busbar that is electrically connected to the terminal member, and a terminal busbar frame that surrounds at least a part of the terminal busbar and is made of an electrically insulating material, one end of the terminal busbar is exposed to the outside of the terminal busbar frame, and the other end of the terminal busbar is formed with a terminal busbar hole, and one end of the terminal member may pass through the terminal busbar hole to be coupled to the inter-busbar hole.

The terminal member may comprise the other end where a screw thread is formed, and the other end of the terminal member may pass through the terminal busbar hole to be coupled with a nut.

A gasket may be located between the nut coupled to the other end of the terminal member and the terminal busbar hole.

At least one side surface of the frame member is formed with a frame recessed part that is recessed toward the inside of the frame member from the outer surface of the frame member, the frame recessed part is formed with the frame hole, and the sizes of the frame recessed part and the terminal busbar assembly may be equal to each other.

The space between the frame recessed part and the terminal busbar assembly may be filled with a sealing member.

The sub-assembly comprises a first sub-assembly including a first battery cell stack and a second sub-assembly including a second battery cell stack, the inter-busbar comprises a pair of first inter-busbars electrically connected to the battery cells included in the first sub-assembly, and a pair of second inter-busbars electrically connected to the battery cells included in the second sub-assembly, the terminal members are formed in a plurality of numbers, and are electrically connected to the pair of first inter-busbars and the pair of second inter-busbars, respectively, and the first inter-busbar and the second inter-busbar may be respectively located in a space between the first battery cell stack and the second battery cell stack.

The frame hole comprises a pair of first frame holes located on one side surface of the frame member and a pair of second frame holes located on the other side surface of the frame member, the terminal busbar assembly comprises a first terminal busbar assembly covering the pair of first frame holes and a second terminal busbar assembly covering the pair of second frame holes, the first terminal busbar assembly may be electrically connected to one of the pair of first inter-busbars and one of the pair of second inter-busbars, and the second terminal busbar assembly may be electrically connected to the other of the pair of first inter-busbars and the other of the pair of second inter-busbars.

The battery cell assembly comprises an inlet and an outlet for circulating a coolant inside the frame member, wherein the coolant may be flowed into the inside of the frame member through the inlet, and discharged through the outlet.

The sub-assembly may comprise a first sub-assembly including a first battery cell stack, and a second sub-assembly including a second battery cell stack, an insulating plate may be disposed between the first sub-assembly and the second sub-assembly, and the insulating plate may be formed with an opening through which the coolant passes.

The inlet and the outlet may be located opposite sides to each other in reference to the insulating plate, the first sub-assembly may be located between the inlet and the insulating plate, and the second sub-assembly may be located between the outlet and the insulating plate.

The coolant flowing-in through the inlet passes through the first sub-assembly, the opening of the insulating plate, and the second sub-assembly in sequence to be discharged through the outlet.

The battery cell assembly further comprises a first sealing assembly and a second sealing assembly that cover opened both sides of the frame member, respectively, wherein the inlet may be coupled to the first sealing assembly, and the outlet may be coupled to the second sealing assembly.

The battery cell is a pouch-type battery cell, and includes electrode leads protruding in both directions, and when the direction between the electrode leads is defined as a longitudinal direction, the first sealing assembly, the first sub-assembly, the insulating plate, the second sub-assembly, and the second sealing assembly may be located in sequence along the longitudinal direction.

The coolant may be an insulating oil, and the coolant may be in direct contact with the battery cell stack housed inside the frame member.

According to certain other aspects of the present disclosure, there is provided a battery pack comprising the above-mentioned battery cell assembly.

### [Advantageous Effects]

According to certain embodiments, the battery cell assembly of the present disclosure and the battery pack including the same can enhance the cooling efficiency of the battery cell assembly and the battery pack including the same through direct cooling of the coolant to the battery cell.

Also, a plurality of sub-assemblies can be disposed along the longitudinal direction within the battery cell assembly to thereby increase the energy density, and an insulating plate in which an opening is formed can be disposed between the plurality of sub-assemblies to thereby improve the fluidity of the coolant.

In addition, the electrical connecting structure between the terminal busbar and the inter-busbar includes a sealing structure, so that the sealing performance to the HV (High Voltage) electrical connecting structure can be secured from the external environment.

The effects of the present disclosure are not limited to the effects mentioned above and additional other effects not described above will be clearly understood from the detailed description and the accompanying drawings by those skilled in the art.

### [BRIEF DESCRIPTION OF THE DRAWINGS]

FIG. 1 is a perspective view showing a conventional battery pack.
FIG. 2 is an exploded perspective view of the battery pack of FIG. 1.
FIG. 3 is a cross-sectional view showing a cross section of one of the battery modules included in the battery pack of FIG. 2.
FIG. 4 is a perspective view of a battery cell assembly according to certain embodiments of the present disclosure.
FIG. 5 is a diagram showing an HV electrical connecting structure on the basis of the upper part of the battery cell assembly of FIG. 4.
FIG. 6 is an exploded perspective view showing a terminal busbar assembly included in the battery cell assembly of FIG. 4 in a separated state.
FIG. 7 is an enlarged view showing a second terminal busbar assembly in the battery cell assembly of FIG. 4.
FIG. 8 is an exploded perspective view showing a sub-assembly and a frame member included in the battery cell assembly of FIG. 4 in a separated state.
FIG. 9 is an exploded perspective view of the battery cell assembly of FIG. 4 in the state where the frame member and end plate have been removed.
FIG. 10 is an enlarged view showing a portion where the first inter-busbar and the second inter-busbar of FIG. 9 are located.
FIG. 11 is an exploded perspective view of the sub-assembly of FIG. 9.
FIG. 12 is an exploded perspective view of the first sub-assembly of FIG. 11.
FIG. 13 is an exploded perspective view showing the first sub-assembly of FIG. 12 in a separated state.
FIG. 14 is a drawing showing the battery cell of FIG. 13.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Now, a battery cell assembly 100 according to certain embodiments of the present disclosure will be described.

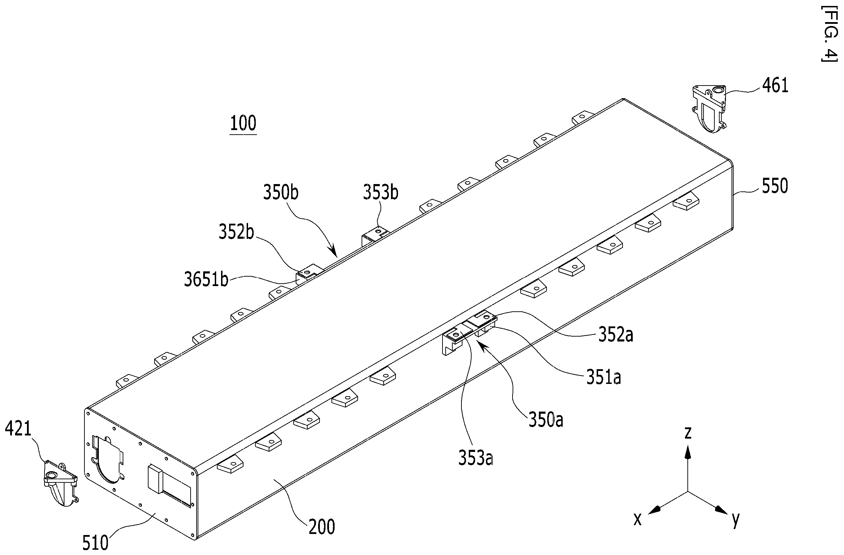

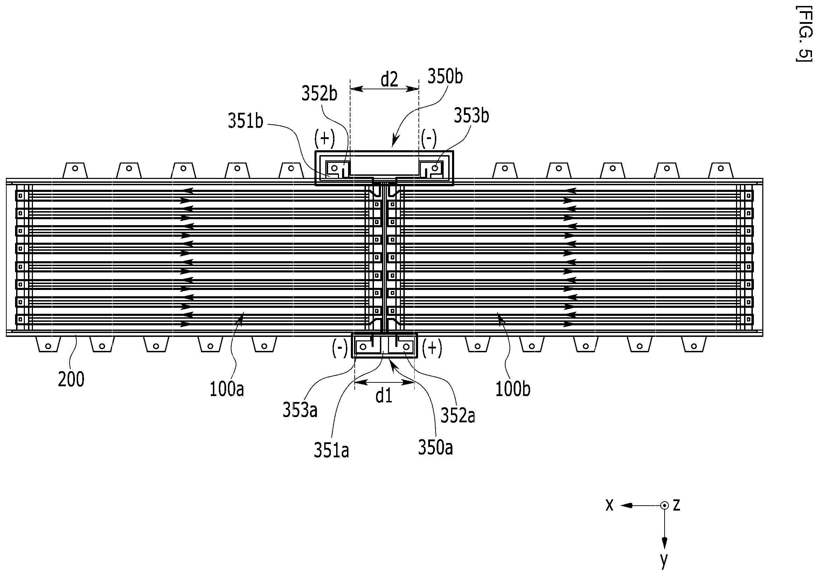

FIG. 4 is a perspective view of a battery cell assembly according to certain embodiments of the present disclosure. FIG. 5 is a diagram showing an HV electrical connecting structure on the basis of the upper part of the battery cell assembly of FIG. 4.

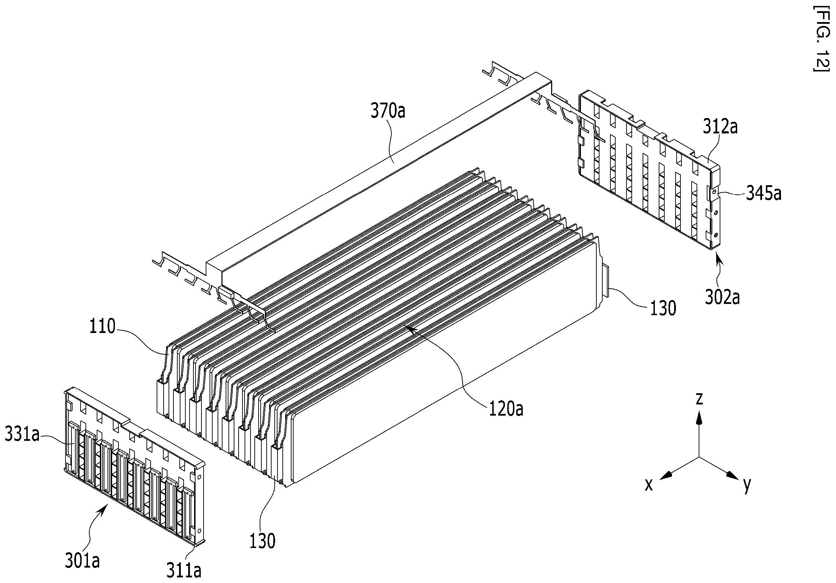

Referring to FIGS. 4 and 5, a battery cell assembly 100 according to certain embodiments of the present disclosure comprises: a pair of sub-assemblies 100a, 100b including a first sub-assembly 100a and a second sub-assembly 100b formed by stacking a plurality of battery cells 110 (FIG. 12); a frame member 200 that houses the sub-assemblies 100a and 100b; and an inlet 421 and an outlet 461 for circulating a coolant inside the frame member 200. The coolant, the inlet 421 and the outlet 461 will be described later.

Referring to FIG. 4, the frame member 200 may be for protecting the first sub-assembly 100a, the second sub-assembly 100b, and the electrical components connected thereto from external physical impact. The first sub-assembly 100a, the second sub-assembly 100b, and the electrical components connected thereto may be housed in the internal space of the frame member 200.

The structure of the frame member 200 may have various shapes. According to one specific embodiment of the present disclosure, the structure of the frame member 200 may be a mono-frame structure. Here, the mono-frame may be constituted by integrating the upper surface, lower surface and both side surface together. In one embodiment, the mono-frame may be manufactured by extrusion molding.

The frame member 200 may have the form opened on both sides. More specifically, the frame member 200 may be provided in the form opened along a longitudinal direction of the battery cell 110 ( FIG. 12). In this case, one surface of the first sub-assembly 100a and the second sub-assembly 100b may not be covered by the frame member 200.

More specifically, the front surface and rear surface of the first battery cell stack 120a (FIG. 12) included in the first sub-assembly 100a may be covered by the first front busbar assembly 301a, the first rear busbar assembly 302a, the sealing assembly 400, the end plate 500 or the like described below, through which the front surface and rear surface of the first battery cell stack 120a (FIG. 12) can be protected from external physical impacts or the like. The above description is given based on the first sub-assembly 100a, but the second sub-assembly 100b may also be described similarly.

Referring to FIG. 5, a battery cell assembly 100 according to one specific embodiment of the present disclosure may comprise a first terminal busbar assembly 350a and a second terminal busbar assembly 350b formed on both side surfaces of a frame member, respectively.

More specifically, in the first terminal busbar assembly 350a, the first positive electrode terminal busbar 352a and the first negative electrode terminal busbar 353a may be exposed to the outside of the first terminal busbar frame 351a. Further, in the second terminal busbar assembly 350b, one end of the second positive electrode terminal busbar 352b and one end of the second negative electrode terminal busbar 353b may be exposed to the outside of the second terminal busbar frame 351b, respectively.

However, the positions of the first positive electrode terminal busbar 352a and the first negative electrode terminal busbar 353a are not limited to those shown in FIG. 5, and can be changed from each other, unlike those shown in FIG. 5. This may be described similarly even in the case of the second positive electrode terminal busbar 352b and the second negative electrode terminal busbar 353b.

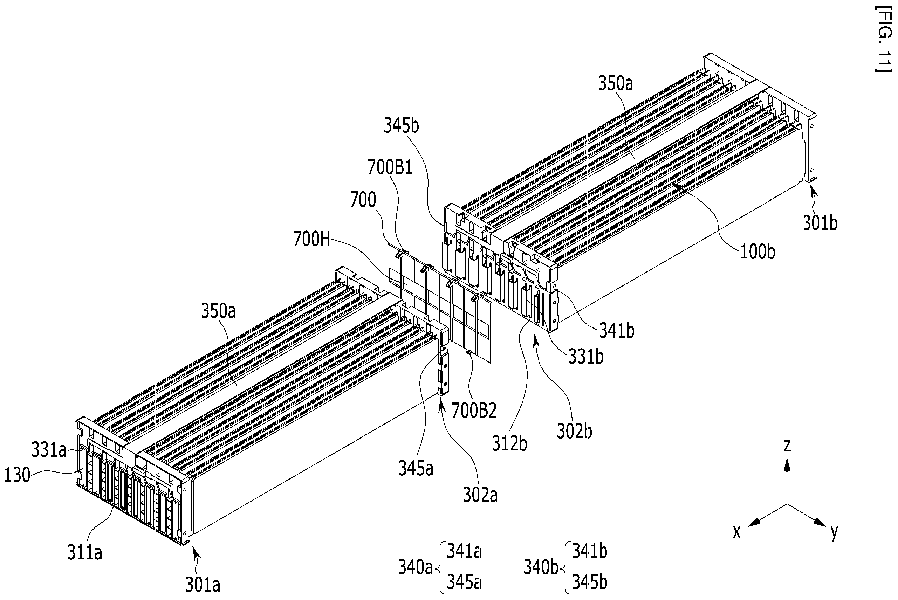

Further, the first inter-busbar 340a (FIG. 11) included in the first sub-assembly 100a may be electrically connected to the other end of the first negative electrode terminal busbar 353a in the first terminal busbar assembly 350a and the other end of the second positive electrode terminal busbar 352b in the second terminal busbar assembly 350b, respectively. Further, the second inter-busbar 340b (FIG. 11) included in the second sub-assembly 100b may be electrically connected to the other end of the first positive electrode terminal busbar 352a in the first terminal busbar assembly 350a and the other end of the second negative electrode terminal busbar 353b in the second terminal busbar assembly 350b, respectively.

Thereby, the first sub-assembly 100a can be connected to another battery cell assembly or a BDU (Battery Disconnect Unit) through one end of the first negative electrode terminal busbar 353a exposed to the outside in the first terminal busbar assembly 350a and one end of the second positive electrode terminal busbar 352b exposed to the outside in the second terminal busbar assembly 350b, and can form an HV (high voltage) connection with them. Further, the second sub-assembly 100b can be connected to another battery cell assembly or a BDU (Battery Disconnect Unit) through one end of the first positive electrode terminal busbar 352a exposed to the outside in the first terminal busbar assembly 350a and one end of the second negative electrode terminal busbar 353b exposed to the outside in the second terminal busbar assembly 350b, and can form an HV (High voltage) connection with them.

In the first terminal busbar assembly 350a, one end of the first positive electrode terminal busbar 352a and one end of the first negative electrode terminal busbar 353a may be located adjacent to each other, and the first terminal busbar assembly 350a may have a size of a first width d1 along the longitudinal direction of the frame member 200. Further, in the second terminal busbar assembly 350b, one end of the second positive electrode terminal busbar 352b and one end of the second negative electrode terminal busbar 353b may be spaced apart from each other by a second distance d2, and also the second terminal busbar frame 351b may be formed with an empty space between one end of the second positive electrode terminal busbar 352b and one end of the second negative electrode terminal busbar 353b.

Here, the size of the first width d1 of the first terminal busbar assembly 350a may be smaller than the second distance d2 between the second positive electrode terminal busbar 352b and the second negative electrode terminal busbar 353b in the second terminal busbar assembly 350b.

Thereby, as the battery cell assembly 100 according to the present embodiment may be disposed along the width direction of the other battery cell assembly 100 and the frame member 200, the first terminal busbar assembly 350a included in the battery cell assembly 100 according to the present embodiment and the second terminal busbar assembly 350b included in the other battery cell assembly 100 may be disposed in a form in which they are interlocked with each other, which provides the advantages of increasing the ease of assembly and space efficiency and simplifying the HV electrical connecting structure.

Next, the connecting structure between the terminal busbar assemblies 350a, 350b and the pair of sub-assemblies 100a, 100b will be described in more detail.

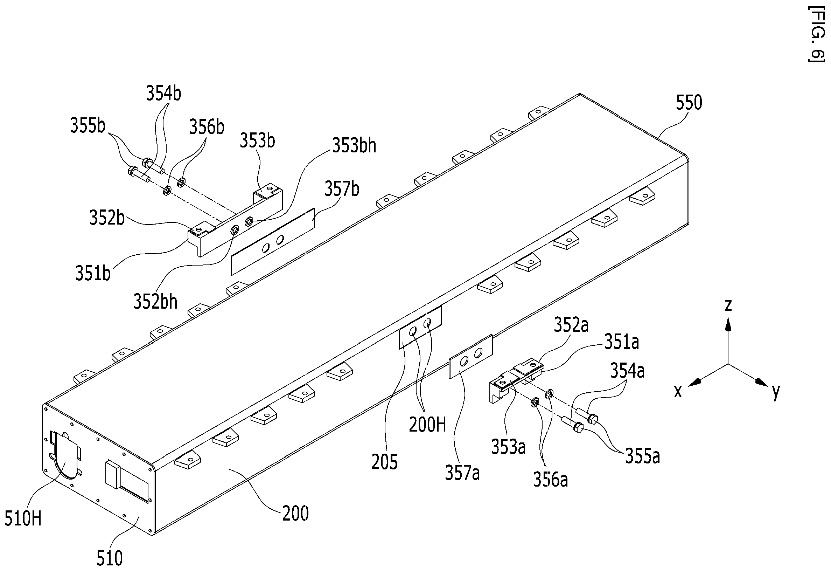

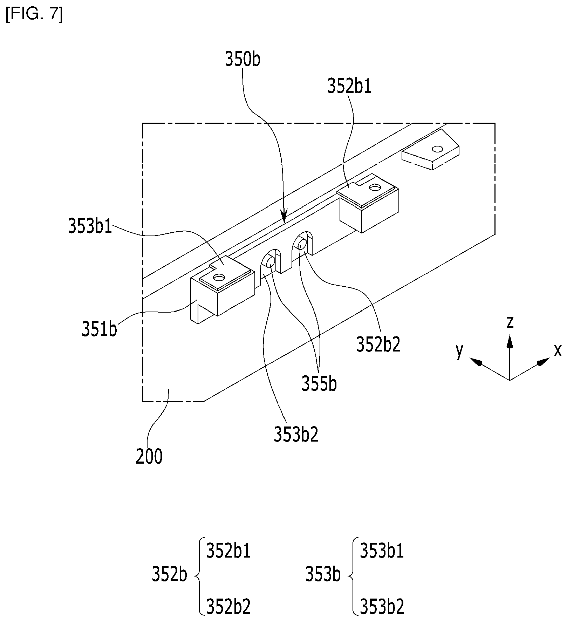

FIG. 6 is an exploded perspective view showing a terminal busbar assembly included in the battery cell assembly of FIG. 4 in a separated state. FIG. 7 is an enlarged view showing a second terminal busbar assembly in the battery cell assembly of FIG. 4.

Referring to FIG. 6, a battery cell assembly 100 according to one specific embodiment of the present disclosure includes: inter-busbars 340a, 340b (FIG. 11) electrically connected to a battery cell 110 (FIG. 12) included in a pair of sub-assemblies 100a, 100b; terminal members 354a, 354b including one end where a screw thread is formed; a frame hole 200H that is formed on at least one side surface of a frame member 200; and terminal busbar assemblies 350a, 350b that cover the frame hole 200H and are connected to the terminal members 354a, 354b.

More specifically, in the battery cell assembly 100 according to the present embodiment, at least one side surface of the frame member 200 may be formed with a frame recessed part 205 that is recessed toward the inside of the frame member 200 from the outer surface of the frame member 200.

Further, a frame hole 200H may be formed in the frame recessed part 205. More specifically, the frame hole 200H may include a pair of first frame holes located on one side surface of the frame member 200 and a pair of second frame holes located on the other side surface of the frame member 200, and the terminal busbar assemblies 350a, 350b may include a first terminal busbar assembly 350a covering the pair of first frame holes 200H and a second terminal busbar assembly 350b covering the pair of second frame holes 200H.

In one embodiment, as shown in FIG. 6, a pair of first frame holes 200H may be formed in the frame recessed part 205, and a pair of first terminal members 354a having different polarities from each other pass through the pair of frame holes 200H respectively and may be electrically connected to the inter-busbars 340a, 340b (FIG. 11) inside the frame member 200. In FIG. 6, one side surface of the frame member 200 is mainly described, but even in the case of the pair of first frame holes 200H located on the other side surface of the frame member 200, the second terminal member 354b may also be electrically connected to the inter-busbars 340a, 340b (FIG. 11) inside the frame member 200.

The sizes of the frame recessed part 205 and the terminal busbar assemblies 350a, 350b may be equal to each other. More specifically, the space between the frame recessed part 205 and the terminal busbar assemblies 350a, 350b may be filled with sealing members 357a, 357b. In other words, the sealing members 357a, 357b may have the same size as the frame recessed part 205 and/or the terminal busbar assemblies 350a, 350b.

In one embodiment, the sealing members 357a, 357b may be made of the same material as the sealant, but are not limited thereto, and may be included in the present embodiment as long as they are members having sealing performance and heat resistance.

Thereby, the battery cell assembly 100 according to the present embodiment has sealing members 357a, 357b formed between the frame member 200 and the terminal busbar assemblies 350a, 350b, which can improve the sealing performance between the frame member 200 and the terminal busbar assemblies 350a, 350b and the sealing performance of the HV electrical connecting structure.

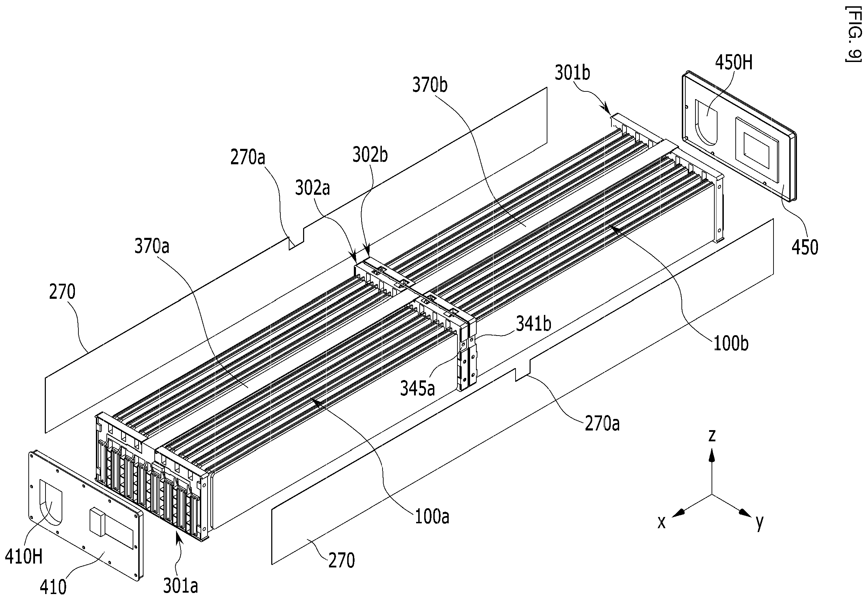

Furthermore, as described later in FIGS. 9 to 14, the battery cell assembly 100 according to the present embodiment has an advantage in that the insulating cooling liquid can flow inside the frame member 200, and the above-mentioned sealing members 357a, 357b can effectively prevent water or liquid leakage of the insulating coolant.

Referring to FIGS. 6 and 7, the terminal busbar assemblies 350a, 350b include terminal busbars 352a, 353a, 352b, 353b that are electrically connected to terminal members 354a, 354b, and terminal busbar frames 351a, 351b that surround at least a part of the terminal busbars 352a, 353a, 352b, 353b and are made of an electrically insulating material.

Hereinafter, the second terminal busbar assembly 350b will be mainly described, and the first terminal busbar assembly 350a can also be described similarly.

More specifically, referring to FIGS. 6 and 7, the second terminal busbar assembly 350b may include a pair of second terminal busbars 352b, 353b electrically connected to a pair of second terminal members 354b, respectively, and a second terminal busbar frame 351b that surrounds at least a part of the pair of second terminal busbars 352b, 353b and is made of an electrically insulating material.

Here, a pair of second terminal members 354b may have different polarities from each other, and a pair of second terminal busbars 352b, 353b may also have different polarities from each other. At this time, a pair of second terminal members 354b and a pair of second terminal busbars 352b, 353b may be electrically connected to each other of the same polarities.

Further, it may be a structure in which the second terminal busbar frame 351b is integrated with the pair of second terminal busbars 352b, 353b, or the pair of second terminal busbars 352b, 353b are inserted into the second terminal busbar frame 351b. In one embodiment, the second terminal busbar frame 351b may be manufactured by injection molding together with the pair of second terminal busbars 352b, 353b.

More specifically, as shown in FIGS. 6 and 7, one ends 352b1, 353b1 of the pair of second terminal busbars 352b, 353b may be exposed to the outside of the second terminal busbar frame 351b. In one embodiment, one ends 352b1, 353b1 of the pair of second terminal busbars 352b, 353b may be exposed to the upper part of the second terminal busbar frame 351b. However, the position of one ends 352b1, 353b1 of the pair of second terminal busbars 352b, 353b is not limited thereto, and can be included in the present embodiment as long as it is a position that facilitates electrical connection with other battery cell assemblies 100.

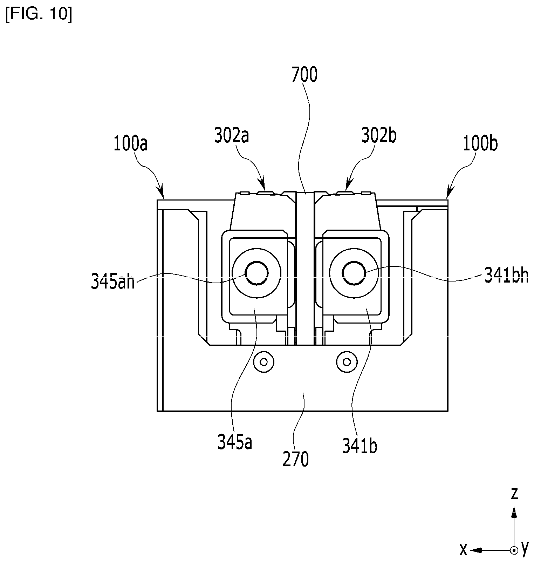

Further, as shown in FIGS. 6 and 7, the other ends 352b2, 353b2 of the pair of second terminal busbars 352b, 353b are formed with second terminal busbar holes 352bh, 353bh, respectively, and one end of the pair of second terminal members 354b where screw threads are formed can pass through the second terminal busbar holes 352bh, 353bh, respectively, and be coupled to an inter-busbar holes 345ah, 341bh (FIG. 10) located inside the frame member.

Further, as shown in FIGS. 6 and 7, the other end of the second terminal member 354b may also be formed with a screw thread, and the other end of the second terminal member 354b may pass through the second terminal busbar holes 352bh, 353bh and be coupled with a second nut 355b.

Thus, in the battery cell assembly 100 according to the present embodiment, based on the second terminal busbar assembly 350b, an electrical connecting structure between the inter-busbars 340a, 340b (FIG. 11) inside the frame member 200 and the pair of second terminal busbars 352b, 353b of the second terminal busbar assembly 350b can be stably formed by the pair of second terminal members 354b.

The above description may be similarly applied even in the case of the first terminal busbar assembly 350a, and based on the first terminal busbar assembly 350a, an electrical connecting structure between the inter-busbars 340a, 340b (FIG. 11) inside the frame member 200 and the pair of first terminal busbars 352a, 353a of the first terminal busbar assembly 350a can be stably formed by the pair of first terminal members 354a.

Further, in the battery cell assembly 100 according to the present embodiment, the second terminal busbar assembly 350b may be configured such that a second gasket 356b is located between the second nut 355b coupled to the other end of the pair of second terminal members 354b and the second terminal busbar holes 352bh, 353bh. In one embodiment, the second gasket 356b may be the same material as a gasket commonly used, but is not limited thereto, and can be included in the present embodiment as long as it is a member having sealing performance and heat resistance. In another embodiment, the second gasket 356b may have an O-ring shape, but is not limited thereto, and can be included in the present embodiment as long as it has a shape that facilitate coupling between constituent elements.

Thus, in the battery cell assembly 100 according to the present embodiment, based on the second terminal busbar assembly 350b, the second gasket 356b is located between the second terminal busbar frame 351b and a pair of second terminal members 354b, which can further improve the sealing performance between the frame member 200 and the second terminal busbar assembly 350b and the sealing performance of the HV electrical connecting structure.

The above description can be similarly applied even in the case of the first terminal busbar assembly 350a. Based on the first terminal busbar assembly 350a, the first gasket 356a is located between the first terminal busbar frame 351a and the pair of first terminal members 354a, which can further improve the sealing performance between the frame member 200 and the first terminal busbar assembly 350a and the sealing performance of the HV electrical connecting structure.

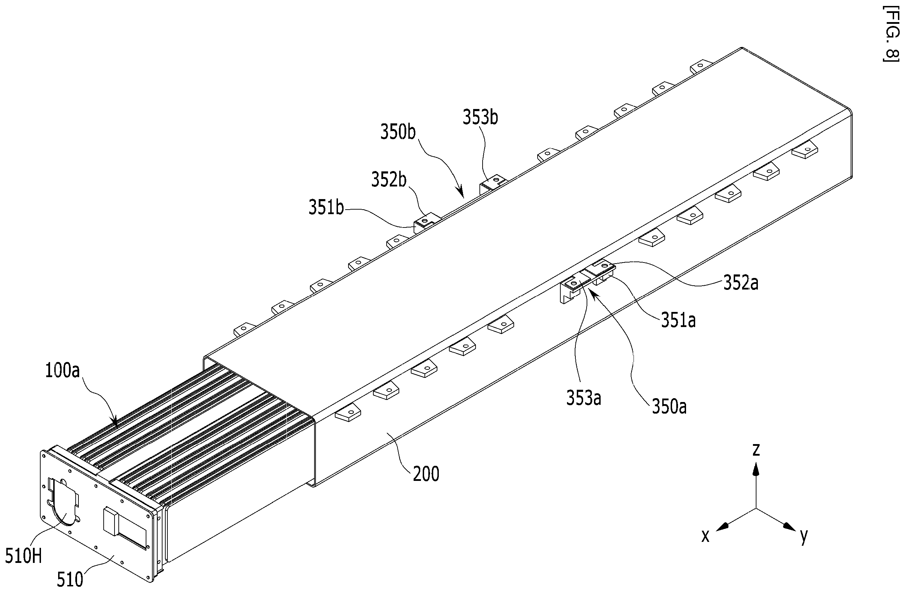

FIG. 8 is an exploded perspective view showing a sub-assembly and a frame member included in the battery cell assembly of FIG. 4 in a separated state. FIG. 9 is an exploded perspective view of the battery cell assembly of FIG. 4 in the state where the frame member and end plate have been removed. FIG. 10 is an enlarged view showing a portion where the first inter-busbar and the second inter-busbar of FIG. 9 are located. FIG. 11 is an exploded perspective view of the sub-assembly of FIG. 9. FIG. 12 is an exploded perspective view of the first sub-assembly of FIG. 11.

Referring to FIG. 6 an FIGS. 9 to11, in the battery cell assembly 100 according to the present embodiment, the pair of sub-assemblies 100a, 100b include a first sub-assembly 100a including a first battery cell stack 120a and a second sub-assembly 100b including a second battery cell stack 120b. Here, the inter-busbars 340a, 340b may include a pair of first inter-busbars 340a electrically connected to the battery cells 110 included in the first sub-assembly 100a, and a pair of second inter-busbars 340b electrically connected to the battery cells 110 included in the second sub-assembly 100b. The pair of first inter-busbars 340a and the pair of second inter-busbars 340b may be respectively located in a space between the first battery cell stack 120a and the second battery cell stack 120b.

The pair of first inter-busbars 340a may include a first positive electrode inter-busbar 341a and a first negative electrode inter-busbar 345a, and the pair of second inter-busbars 340b may include a second positive electrode inter-busbar 341b and a second negative electrode inter-busbar 345b.

Here, the terminal members 354a, 354b are formed in a plurality of numbers, and may be electrically connected to a pair of first inter-busbars 340a and a pair of second inter-busbars 340b, respectively. More specifically, a pair of first terminal members 354a may be electrically connected to a first negative electrode inter-busbar 345a and a second positive electrode inter-busbar 341b, and a pair of second terminal members 354b may be electrically connected to a first positive electrode inter-busbar 341a and a second negative electrode inter-busbar 345b.

Further, the first terminal busbar assembly 350a may be electrically connected to one of the pair of first inter-busbars 340a and one of the pair of second inter-busbars 340b, and the second terminal busbar assembly 350b may be electrically connected to the other of the pair of first inter-busbars 340a and the other of the pair of second inter-busbars 340b. More specifically, the first terminal busbar assembly 350a may be electrically connected to the first negative electrode inter-busbar 345a and the second positive electrode inter-busbar 341b, and the second terminal busbar assembly 350b may be electrically connected to the first positive electrode inter-busbar 341a and the second negative electrode inter-busbar 345b.

Referring to FIG. 10, in the battery cell assembly 100 according to the present embodiment, a first negative electrode inter-busbar hole 345ah may be formed in the first negative electrode inter-busbar 345a, and a second positive electrode inter-busbar hole 341bh may be formed in the second positive electrode inter-busbar 341b. Although not shown in FIG. 10, the first positive electrode inter-busbar 341a and the second negative electrode inter-busbar 345b may also be described similarly.

One end of the above-mentioned terminal member 354a, 354b can be connected to the first negative electrode inter-busbar hole 345ah and the second positive electrode inter-busbar hole 341bh through the frame hole 200H formed in the frame member 200, respectively. More specifically, one end of the pair of first terminal members 354a coupled to the first terminal busbar assembly 350a can pass through the frame hole 200H and be coupled to the first negative electrode inter-busbar hole 345ah and the second positive electrode inter-busbar hole 341bh, respectively. Although not shown in FIG. 10, the first positive electrode inter-busbar 341a and the second negative electrode inter-busbar 345b may also be described similarly.

Thus, in the battery cell assembly 100 according to the present embodiment, it is possible to stably form an electrical connecting structure between the inter-busbars 340a, 340b located inside the battery cell assembly 100 and the terminal busbar assemblies 350a, 350b located outside the battery cell assembly 100.

Hereinafter, a pair of sub-assemblies 100a, 100b included in a battery cell assembly 100 according to the present embodiment will be described in detail. Most of the description is given based on the first sub-assembly 100a, but the second sub-assembly 100b may be described similarly.

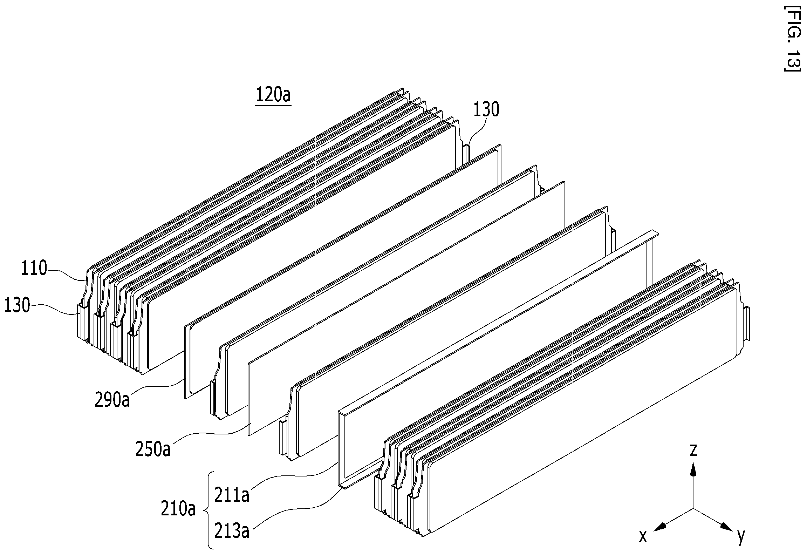

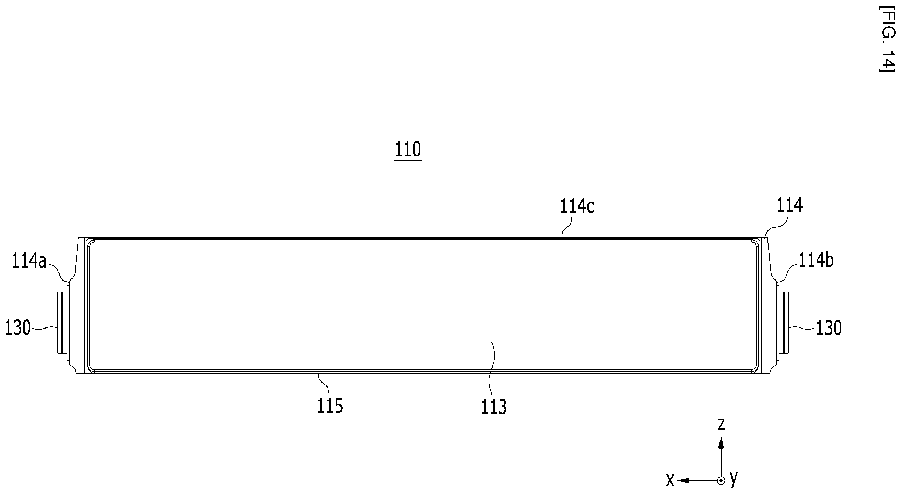

FIG. 13 is an exploded perspective view showing the first sub-assembly of FIG. 12 in a separated state. FIG. 14 is a drawing showing the battery cell of FIG. 13.

Referring to FIG. 8 and FIGS. 12 to 14, the battery cell 110 is a pouch-type battery cell, and may include electrode leads 130 protruding in both directions. The pouch-type battery cell may be formed by housing an electrode assembly in a pouch case made of a laminate sheet including a resin layer and a metal layer, and then adhering the outer peripheral part of the pouch case. Such a battery cell 110 may have a rectangular sheet structure. Specifically, the battery cell 110 according to the present embodiment has a structure in which two electrode leads 130 protrude from one end 114a and the other end 114b of the battery main body 113, respectively. More specifically, the electrode leads 130 may protrude in opposite directions to each other, and one of such electrode leads 130 may be a positive electrode lead and the other may be a negative electrode lead. In the present embodiment, the direction between the electrode leads 130 protruding in both directions of the battery cell 110 is referred to as a longitudinal direction of the battery cell 110. In one embodiment, referring to FIG. 8 and FIGS. 12 to 14, the direction parallel to the x-axis may correspond to a longitudinal direction of the battery cell 110.

The battery cells 110 can be produced by adhering both end parts 114a, 114b of a cell case 114 and one side part 114c connecting them in a state in which an electrode assembly (not shown) is housed in a cell case 114. In other words, the battery cell 110 according to one specific embodiment of the present disclosure has a total of three sealing portions, wherein the sealing portions have a structure that is sealed by a method such as fusion, and the remaining other one side part may be composed of a folding part 115.

Such battery cells 110 may be formed in a plurality of numbers, and the plurality of battery cells 110 may be stacked so as to be electrically connected to each other, thereby forming battery cell stacks 120a, 120b. More specifically, the first sub-assembly 100a includes a first battery cell stack 120a, and the second sub-assembly 100b includes a second battery cell stack 120b.

In particular, the battery cells 110 may be stacked along one direction while being kept upright, in a state where one-side surfaces of the battery main body 113 of the battery cells 110 face each other. More specifically, as shown in FIG. 8 and FIGS. 12 to 14, the battery cells 110 may be stacked in a direction from one side to the other side of the side surface parts of the frame member 200 while being kept upright, so that one surface of the battery main body 113 of the battery cells 110 is parallel to the side surface parts of the frame member 200. In one embodiment, a state in which a plurality of battery cells 110 are stacked along a direction parallel to the y-axis is depicted. When the plurality of battery cells 110 are stacked along a direction parallel to the y-axis in this manner, the electrode leads 130 in one battery cell 110 may protrude along the x-axis direction and the -x-axis direction, respectively.

In one region, a plurality of battery cells 110 may be stacked along a direction parallel to the y-axis to form a first battery cell stack 120a, and in the other region, a plurality of battery cells 110 may be stacked along a direction parallel to the y-axis to form a second battery cell stack 120b.

The cell case 114 is generally formed in a laminated structure of resin layer/metal thin film layer/resin layer. For example, when the surface of the cell case is formed of an O (oriented)-nylon layer, it tends to slide easily due to external impact when stacking a plurality of battery cells to form a medium- or large-sized battery module. Therefore, in order to prevent this problem and maintain a stable stacked structure of battery cells, a tacky adhesive such as a double-sided tape or a chemical adhesive that bonds through chemical reactions during adhesion can be attached to the surface of the cell case to form a first battery cell stack 120a and a second battery cell stack 120b.

Meanwhile, the first battery cell stack 120a and the second battery cell stack 120b are disposed along a direction perpendicular to the direction in which the battery cells 110 are stacked in the first battery cell stack 120a or the second battery cell stack 120b. In other words, the first battery cell stack 120a and the second battery cell stack 120b may be disposed along the direction in which the electrode leads 130 protrude based on the battery cell 110. That is, the first battery cell stack 120a and the second battery cell stack 120b are disposed along the longitudinal direction of the battery cell 110. For example, as shown in FIG. 10, when a plurality of battery cells 110 are stacked along a direction parallel to the y-axis to form a first battery cell stack 120a and a second battery cell stack 120b, the first battery cell stack 120a and the second battery cell stack 120b may be located along a direction parallel to the x-axis.

Referring to FIGS. 11 and 12, the battery cell assembly 100 according to the present embodiment may include a first sub-assembly 100a and a second sub-assembly 100b disposed along the longitudinal direction of the battery cell 110. Specifically, the battery cell assembly 100 according to the present embodiment may be one in which the first sub-assembly 100a and the second sub-assembly 100b are electrically coupled to each other, or are individually mounted inside the frame member 200. That is, the battery cell assembly 100 according to the present embodiment corresponds to a twin model battery cell assembly having the first sub-assembly 100a and the second sub-assembly 100b.

Here, the first sub-assembly 100a may include a first battery cell stack 120a and first busbar assemblies 301a, 302a, and the second sub-assembly 100b may include a second battery cell stack 120b and second busbar assemblies 301b, 302b. Here, the first battery cell stack 120a and the second battery cell stack 120b may be disposed along the longitudinal direction of the battery cell 110.

Additionally, the first sub-assembly 100a may be configured such that the first busbar assemblies 301a, 302a are located on the front and rear surfaces of the first battery cell stack 120a, respectively, and the second sub-assembly 100b may be configured such that the second busbar assemblies 301b, 302b are located on the front and rear surfaces of the second battery cell stack 120b, respectively.

More specifically, the first busbar assemblies 301a, 302a may be located in the direction in which the electrode leads 130 of the battery cells 110 included in the first battery cell stack 120a protrude. Further, the second busbar assemblies 301b, 302b may be located in the direction in which the electrode leads 130 of the battery cells 110 included in the second battery cell stack 120b protrude. The first busbar assemblies 301a, 302a and the second busbar assemblies 301b, 302b may each include a busbar frame, a busbar, and a terminal busbar, which will be described later.

Referring to FIGS. 8 and 9, the battery cell assembly 100 according to the present embodiment may include a sealing assembly 400. The sealing assembly 400 may be formed such that it is located on opened both sides of the frame member 200 to cover the pair of sub-assemblies 100a, 100b. The sealing assembly 400 located on opened one side of the frame member 200 may be a first sealing assembly 410, and the sealing assembly 400 located on the opened other side of the frame member 200 may be a second sealing assembly 450. That is, the battery cell assembly 100 according to the present embodiment may further include a first sealing assembly 410 and a second sealing assembly 450 that cover the opened both sides of the frame member 200, respectively.

The sealing assembly 400 may separate the opened both sides of the frame member 200 from an external environment. Specifically, when the coolant is injected into the inside of the frame member 200, the sealing assembly 400 may perform the role of sealing so that the coolant does not leak to the outside.

Referring to FIG. 4, the battery cell assembly 100 according to the present embodiment may include an end plate 500. The end plate 500 may formed such that it is located on opened both sides of the frame member 200 to cover the sealing assembly 400. The end plate 500 located on opened one side of the frame member 200 may be a first end plate 510, and the end plate 500 located on the opened other side of the frame member 200 may be a second end plate 550. The inlet 421 can be coupled to the first inlet hole 510H formed in the first end plate 510, and the outlet 461 can be coupled to the first outlet hole 550H formed in the second end plate 550.

The end plate 500 can physically protect the battery cell stack 120 and other electrical components from external impact.

Referring to FIGS. 11 to 13, the first sub-assembly 100a may include the first battery cell stack 120a and the first busbar assemblies 301a, 302a. More specifically, the first busbar assemblies 301a, 302a can be located on the front and rear sides of the first battery cell stack 120a, respectively. The first busbar assemblies 301a, 302a may be located in the direction in which the electrode leads 130 of the battery cells 110 included in the first battery cell stack 120a protrude. Additionally, a first flexible printed circuit board (FPCB) 370a electrically connected to the first busbar assemblies 301a, 302a may be provided.

The first battery cell stack 120a may include a plurality of battery cells 110, at least one first cooling fin 210a located between the plurality of battery cells 110, and a first compression pad 250a provided on one surface of the battery cell 110 located on the outermost side among the battery cells 110.

The first cooling fin 210a may be located between the plurality of battery cells 110. For example, the first cooling fin 210a may be located between two or more battery cells 110. Specifically, one first cooling fin 210a and another adjacent first cooling fin 210a may be located with two or more battery cells 110 interposed between them.

The first cooling fin 210a may include a first plate 211a that be in contact with one side surface of the battery cell 110. Here, the one side surface of the battery cell 110 may be one surface of the battery body 113 (FIG. 14) of the battery cell 110, which may be one surface of the battery cell 110 that extends along the longitudinal direction (x-axis direction).

One surface of the first plate 211a may be in contact with one side surface of the battery cell 110 that faces one surface of the first plate 211a. The other surface of the first plate 211a may be in contact with one surface of another adjacent battery cell 110 facing the other surface of the first plate 211a. In this case, although not specifically shown in the figure, an adhesive member is interposed between the side surface of the battery cell 110 and the first plate 211a, so that the battery cell 110 and the first plate 211a may be adhesively fixed. For example, the adhesive member may be an insulating tape.

The upper surface (z-axis direction) of the first plate 211a may be in contact with the upper surface of the frame member 200, and the lower surface of the first plate 211a may be in contact with the lower surface of the frame member 200. Thereby, the first cooling fin 210a can be fixedly located within the frame member 200, so that the battery cell 110 adhered to the first cooling fin 210a can also be fixedly located within the frame member 200.

If the size of the first plate 211a is larger than the size of the battery cell 110, the upper and lower parts of the battery cell 110 can be located at a prescribed interval from the upper and lower surfaces of the frame member 200. Specifically, if the height of the first plate 211a is greater than the height of the battery cell 110, the battery cell 110 may be adhesively fixed while being locating at the center of the first plate 211a. In this case, the upper and lower parts of the battery cell 110 can be located at a prescribed interval from the upper and lower surfaces of the frame member 200. Here, the height of the battery cell 110 and the first plate 211a means the length in the z-axis direction.

The first cooling fin 210a may further include a first plate 211a and a first protrusion 213a protruding from one end of the first plate 211a. In one embodiment, the first cooling fin 210a may be L-shaped. Specifically, referring to FIG. 13, the first cooling fin 210a may include a first plate 211a having a surface corresponding to or larger than one side surface of the battery cell 110, and a first protrusion 213a protruding from one end of the first plate 211a so as to be parallel to the stacking direction (y-axis direction) of the first battery cell stack 120a.

The first protrusion 213a is a region that protrudes in a direction perpendicular to the first plate 211a, and may be in contact with at least one of the upper surface or lower surface of the frame member 200. Specifically, one surface of the first protrusion 213a may be located facing the upper surface or lower surface of the battery cell 110, and the other surface of the first protrusion 213a may be in contact with the lower surface or upper surface of the frame member 200.

For example, one surface of the first protrusion 213a may be located facing the lower surface of the battery cell 110, and the upper surface and lower surface of the battery cell 110 may be located while being adhesively fixed to the first plate 211a at a prescribed height from the upper and lower surfaces of the frame member 200. That is, a prescribed space may be provided between one surface of the first protrusion 213a and the lower surface of the battery cell 110 and between the upper surface of the frame member 200 and the upper surface of the battery cell 110, so that the coolant described below may move between them. In this case, the distance between one surface of the first protrusion 213a and the lower surface of the battery cell 110 may correspond to the distance between the upper surface of the frame member 200 and the upper surface of the battery cell 110.

The other surface of the first protrusion 213a may be in contact with the bottom part of the frame member 200. Specifically, the other surface of the first protrusion 213a may be adhesively fixed while being in contact with the bottom part of the frame member 200, so that the first cooling fin 210a can be fixed and located within the frame member 200.

However, the shape of the first cooling fin 210a is not limited to that shown in the figure, and may be the shape of a flat plate, and any shape is possible as long as it can fix the battery cell 110 while being in contact with the battery cell 110.

The first cooling fin 210a may be made of a metal. Specifically, the first cooling fin 210a may be made of a metal with high thermal conductivity. Therefore, the first cooling fin 210a can directly receive transfer of heat generated from the battery cell 110 by charge and discharge of the battery. When heat is generated, the heat is transferred to the first cooling fin 210a in contact with the side surface of the battery cell 110 to perform primary cooling, and a coolant described later comes into direct contact with the upper part and lower part of the battery cell 110 to perform secondary cooling. This enables direct cooling to the upper and lower regions of the battery cell, which are relatively difficult to cool in the prior art, thereby improving the cooling efficiency.

Additionally, the second cooling fin 290a may be located between a plurality of battery cells 110. For example, the second cooling fin 290a may be located between two or more battery cells 110. Specifically, one second cooling fin 290a and another adjacent second cooling fin 290a may be located with two or more battery cells 110 interposed between them. More specifically, the second cooling fin 290a differs from the first cooling fin 210a in that it does not include a separate protrusion, and other features may be described similarly to the first cooling fin 210a as a whole.

The first compression pad 250a may be located between the battery cells 110 included in the first battery cell stack 120a, or may be located on the outermost side of the first battery cell stack 120a. When the battery cell 110 swells due to charge and discharge, the first compression pad 250a may serve to absorb the swelling. Specifically, the first compression pad 250a may push out the side surface part of the frame member 200 while the battery cells 110 swell, thereby preventing breakage of the cell case 114 (FIG. 14) of the battery cell 110 and improving the safety of the battery cell assembly 100.

Referring to FIGS. 11 and 12, the first busbar assemblies 301a, 302b included in the first sub-assembly 100a may include a first front busbar assembly 301a that covers the front surface of the first battery cell stack 120a and a first rear busbar assembly 302a that covers a rear surface of the first battery cell stack 120a.

Here, the first front busbar assembly 301a may include a first front busbar frame 311a and a first busbar 331a mounted on the first front busbar frame 311a, respectively.

The first front busbar frame 311a may be located on the front surface of the first battery cell stack 120a to cover the front surface of the first battery cell stack 120a and at the same time, guide the connection between the first battery cell stack 120a and an external device.

The first busbar 331a may be mounted on the first front busbar frame 311a. In a specific embodiment, the inner surface of the first front busbar frame 311a may face the first battery cell stack 120a, and the outer surface of the first front busbar frame 311a may be mounted with the first busbar 331a.

The first front busbar frame 311a may include an electrically insulating material. The first front busbar frame 311a may limit the first busbar 331a from making contact with other parts of the battery cells 110 except the part where it is joined to the electrode lead (not shown), thereby preventing occurrence of an electrical short circuit.

The first busbar 331a may be mounted on the outer surface of the first front busbar frame 311a, and may be for electrically connecting the battery cells 110 included in the first battery cell stack 120a, and electrically connecting the first battery cell stack 120a and an external device circuit. The first busbar 331a is located on the first front busbar frame 311a, and the first front busbar assembly 301a is covered by the sealing assembly 400 and the end plate 500 described below, which may make it possible to be protected from external impacts and the like, and minimize deterioration of durability due to external moisture.

The first busbar 331a can be electrically connected to the first battery cell stack 120a through the electrode lead 130 of the battery cell 110. Specifically, the electrode lead 130 of the battery cell 110 can be bent after passing through a slit formed in the first front busbar frame 311a and connected to the first busbar 331a. The battery cells 110 included in the first battery cell stack 120a can be electrically connected in series or in parallel by the first busbar 331a. The connection method between the electrode lead 130 and the first busbar 331a is not particularly limited, and as an example, weld bonding may be applied.

The first flexible printed circuit board 370a is configured such that it is mounted to extend in the longitudinal direction of the battery cells 110 to sense the battery cells 110. That is, as shown in FIGS. 11 and 12, the first flexible printed circuit board 370a senses voltage data or thermal data of the battery cells 110 while being located on the upper surface of the first battery cell stack 120a. In particular, the first flexible printed circuit board 370a can be electrically connected to the first busbar 331a while being bent at one end toward the first front busbar assembly 301a. Thereby, the voltage data of each battery cell 110 can be sensed and transmitted to the outside.

Here, the first rear busbar assembly 302a may include a first rear busbar frame 312a and a first busbar 331a mounted on the first rear busbar frame 312a. The details of the first rear busbar assembly 302a may be mostly the same as those described above for the first front busbar assembly 301a, and only the different parts will be described below.

More specifically, in the first rear busbar assembly 302a, the first inter-busbar 340a may be located on both side surfaces of the first rear busbar frame 312a, respectively. Here, the first inter-busbar 340a may be electrically connected to the first busbar 331a mounted on the first rear busbar frame 312a. More specifically, the first inter-busbar 340a may include a first positive electrode inter-busbar 341a and a first negative electrode inter-busbar 345a having different polarities from each other. Further, as described above, the first positive electrode inter-busbar 341a and the first negative electrode inter-busbar 345a may be electrically connected to the terminal busbars 353a, 352b included in the terminal busbar assemblies 350a, 350b located outside the frame member 200.

Further, the first rear busbar assembly 302a may be located on the rear surface of the first battery cell stack 120a to cover the rear surface of the first battery cell stack 120a and at the same time, guide the connection between the first battery cell stack 120a and an external device. In particular, the first rear busbar assembly 302a may be located inside the frame member 200, thereby protecting the electrical connecting structure between the first inter-busbar 340a and the terminal busbars 353a, 352b from external impacts, etc.

Referring to FIGS. 8, 9 and 11, in the battery cell assembly 100 according to the present embodiment, the first sub-assembly 100a and the second sub-assembly 100b may be disposed such that the first rear busbar assembly 302a of the first sub-assembly 100a and the second rear busbar assembly 302b of the second sub-assembly 100b face each other. In other words, the first rear busbar assembly 302a of the first sub-assembly 100a and the second rear busbar assembly 302b of the second sub-assembly 100b may be located at the center of the battery cell assembly 100.

As a result, when the first rear busbar assembly 302a and the second rear busbar assembly 302b are located at the center of the battery cell assembly 100, and a plurality of battery cell assemblies 100 are disposed along the width direction of the battery cell assembly 100, the electrical connecting structure between the first inter-busbar 340a and the terminal busbars 353a, 352b and the electrical connecting structure between the second inter-busbar 340b and the terminal busbars 352a, 353b may be disposed between adjacent battery cell assemblies 100.

That is, in a structure in which a plurality of battery cell assemblies 100 are disposed, the electrical connecting structure between the first inter-busbar 340a and the terminal busbars 353a, 352b and the electrical connecting structure between the second inter-busbar 340b and the terminal busbars 352a, 353b can be more stably protected from external impacts, etc.

Referring to FIG. 9, the battery cell assembly 100 according to the present embodiment may be provided with a side plate 270 that covers both side surfaces of the first sub-assembly 100a and the second sub-assembly 100b. Here, the length of the side plate 270 may correspond to the sum of the lengths of the first sub-assembly 100a and the second sub-assembly 100b. However, the shape of the side plate 270 is not limited thereto, and a plurality of side plates 270 may cover both side surfaces of the first sub-assembly 100a and the second sub-assembly 100b, respectively.

The side plate 270 may be a plate extending along the longitudinal direction of the battery cell 110. In one embodiment, the side plate 270 may be a metal having rigidity.

The side plate 270 may be located facing the battery cell 110 located at the outermost side among the battery cells 110 included in the first sub-assembly 100a and the battery cell 110 located on the outermost side among the battery cells 110 included in the second sub-assembly 100b.

Thereby, in the battery cell assembly 100 according to the present embodiment, the side plate 270 may serve to protect the outermost battery cell 110 or the compression pad 250a of the first sub-assembly 100a and the second sub-assembly 100b, when the first sub-assembly 100a and the second sub-assembly 100b are each inserted and mounted into the frame member 200 with the insulation plate 700 interposed between them.

Additionally, the battery cell assembly 100 of the present embodiment is a twin model having a first battery cell stack 120a and a second battery cell stack 120b, and the battery cell stack 120 is longer than a typical battery cell stack, so that it may not be easy to insert it into the frame member 200 and assemble it. In this case, as shown in FIGS. 8 and 9, the side plate 270 guides the insertion of the battery cell stack 120 into the frame member 200, so that the battery cell assembly can be easily assembled without damage to the battery cells 110 and/or the compression pads 250a, 250b.

Referring to FIGS. 9 and 10, a side recessed part 270a may be formed in the center of the side plate 270 included in the battery cell assembly 100 of the present embodiment. Here, the side recessed part 270a may be a portion recessed and formed toward the center from the upper part of the side plate 270. Here, the inter-busbars 340a, 340b of the first sub-assembly 100a and the second sub-assembly 100b of the present embodiment may be exposed to the outside of the side plate 270 through the side recessed part 270a.

As a result, the side plate 270 can stably assist electrical connection inside and outside the battery cell assembly 100 while protecting the constituent elements inside the battery cell assembly 100 and facilitating assembly of the battery cell assembly 100 as described above.

Next, a structure for circulating a coolant inside a battery cell assembly according to the present embodiment will be described in detail.

Referring again to FIGS. 4, 9 and 11, the battery cell assembly 100 according to the present embodiment includes an inlet 421 and an outlet 461 for circulating a coolant inside the frame member 200. The coolant is flowed into the frame member 200 through the inlet 421 and then discharged to the outside of the battery cell assembly 100 through the outlet 461.

The coolant can be in direct contact with the first battery cell stack 120a, the second battery cell stack 120b, the first busbar assemblies 301a, 302a, the second busbar assemblies 301b, 302b and other electrical components housed inside the frame member 200, and can transfer and receive the heat generated from them.

The coolant may be a fluid. However, since the coolant is in direct contact with the first battery cell stack 120a, the second battery cell stack 120b, the first busbar assemblies 301a, 302a, the second busbar assemblies 301b, 302b and other electrical components within the battery cell assembly 100, the coolant needs to be electrically insulated. Therefore, the coolant may be a material having insulation properties. In one embodiment, the coolant may be an insulating oil.

That is, in the case of the present embodiment, the coolant can be in direct contact with the first battery cell stack 120a, the second battery cell stack 120b, the first busbar assemblies 301a, 302a, the second busbar assemblies 301b, 302b and other electrical components that generate heat within the battery cell assembly 100, thereby cooling them while transferring and receiving heat. Therefore, compared to the conventional battery module 1 (see FIG. 3) that indirectly cools the battery module 1 using a heat sink 6 or the like, the battery cell assembly 100 according to the present embodiment can improve the cooling efficiency through direct cooling, thereby extending the battery life.

At this time, in the present embodiment, an insulating plate 700 is disposed between the first battery cell stack 120a and the second battery cell stack 120b, and an opening 700H through which the coolant passes is formed in the insulating plate 700. In one embodiment, the opening 700H may be formed in the center of the insulating plate 700, and more specifically, the opening 700H may be opened in a rectangular shape in which the upper side and lower side are longer than the both sides. That is, the opening 700H may be opened so as to extend long along a direction in which the battery cells 110 are stacked.

The insulating plate 700 includes a first insulating protrusion 700B1 located at an upper part and a second insulating protrusion 700B2 located at a lower part, and the first insulating protrusion 700B1 and the second insulating protrusion 700B2 can be stably coupled in a form in which the first rear busbar assembly 302a and the second rear busbar assembly 302b are interlocked, respectively.

The insulating plate 700 can include a material having electrical insulation properties. In one embodiment, the insulating plate 700 may be a plastic injection molded product.

More specifically, the inlet 421 and the outlet 461 may be located on opposite sides to each other in reference to the insulating plate 700. A first battery cell stack 120a may be located between the inlet 421 and the insulating plate 700, and a second battery cell stack 120b may be located between the outlet 461 and the insulating plate 700.

The coolant flowing in through the inlet 421 may pass through the first battery cell stack 120a, the opening 700H of the insulating plate 700, and the second battery cell stack 120b in sequence, and be discharged through the outlet 461.

Both the first battery cell stack 120a and the second battery cell stack 120b are included inside one frame member 200, and thus, there is a risk of occurrence of a short circuit due to contact between the first rear busbar assembly 302a located on the rear surface of the first battery cell stack 120a and the second rear busbar assembly 302b located on the rear surface of the second battery cell stack 120b.

Further, as described above, the battery cell assembly 100 according to the present embodiment has the form that extends along the longitudinal direction, including the first battery cell stack 120a and the second battery cell stack 120b. When the coolant circulates inside the frame member 200, a section where the flow of the coolant stagnates may occur between the first battery cell stack 120a and the second battery cell stack 120b.

Thus, in the present embodiments, an insulating plate 700 having electrical insulation properties is disposed between the first battery cell stack 120a and the second battery cell stack 120b. The insulating plate 700 is used to ensure electrical insulation properties and creepage distance between the first battery cell stack 120a and the second battery cell stack 120b, or between the first rear busbar assembly 302a located on the rear surface of the first battery cell stack 120a and the second rear busbar assembly 302b located on the rear surface of the second battery cell stack 120b.

Additionally, the insulating plate 700 is designed so that an opening 700H through which the coolant passes is formed in the center of the insulating plate 700, thereby preventing the flow stagnation of the coolant from occurring in a space between the first battery cell stack 120a and the second battery cell stack 120b. That is, an attempt is made to secure the flowability of the coolant and thus increase the cooling performance.

Referring to FIGS. 4 and 9, as described above, the battery cell assembly 100 may include a first sealing assembly 410 and a second sealing assembly 450 that cover the opened both sides of the frame member 200, respectively. The inlet 421 may be coupled to the second inlet hole 410H formed in the first sealing assembly 410, and the outlet 461 may be coupled to the second outlet hole 450H formed in the second sealing assembly 450.

As described above, the battery cell 110 according to the present embodiment is a pouch-type battery cell, and may include electrode leads 130 protruding in both directions. The direction between the electrode leads 130 protruding in both directions may be defined as a longitudinal direction of the battery cell 110. The direction parallel to the x-axis may correspond to a longitudinal direction of the battery cell 110. Along this longitudinal direction, the first sealing assembly 410, the first battery cell stack 120a, the insulating plate 700, the second battery cell stack 120b, and the second sealing assembly 450 may be located in sequence. That is, the coolant flowing in through the inlet 421 formed in the first sealing assembly 410 may pass through the first battery cell stack 120a, the opening 700H of the insulating plate 700, and the second battery cell stack 120b in sequence and be discharged through the outlet 461 formed in the second sealing assembly 450.

In the battery cell assembly 100 according to the present embodiment, the first front busbar assembly 301a electrically connected to the first battery cell stack 120a and the second front busbar assembly 301b electrically connected to the second battery cell stack 120b may be located on opened one surface of the frame member 200. Here, the first sealing assembly 410 may be mounted while covering the first front busbar assembly 301a, and the second sealing assembly 450 may be mounted while covering the second front busbar assembly 301b. More specifically, the first sealing assembly 410 may cover the first front busbar assembly 301a located on one side of the first battery cell stack 120a, and the second sealing assembly 450 may cover the second front busbar assembly 301b located on one side of the second battery cell stack 120b.

Additionally, unlike those shown in FIG. 4, the inlet 421 may be located lower than the center on the basis of the height of the battery cell stack 120. The inlet 421 may be located close to the lower end of the first sealing assembly 410. Specifically, the inlet 421 can be located lower than the center on the basis of the height of the first sealing assembly 410. Here, the height of the battery cell stack 120 or the first sealing assembly 410 means the length in the z-axis direction in the drawing.

Putting the position of the inlet 421 and the position of the outlet 461 together, the inlet 421 may be located lower than the center based on the height of the battery cell stack 120, and the outlet 461 may be located higher than the center based on the height of the battery cell stack 120. That is, the inlet 421 may be located close to the lower end of the first sealing assembly 410, and the outlet 461 may be located close to the upper end of the second sealing assembly 450.

If the inlet 421 is located higher than the center based on the height of the battery cell stack 120, the coolant may flow into the battery cell assembly 100 as if it is falling from a high position, which may cause bubbles to form inside the coolant. Such bubbles become a factor that inhibits the cooling effect.

In addition, if the outlet 461 is located lower than the center based on the height of the battery cell stack 120, the coolant that flows into the battery cell assembly 100 is filled only up to the height of the outlet 461 and then escapes to the outside, so that the inside of the battery cell assembly 100 may not be filled with a sufficient amount of coolant, which may result in a decrease in cooling performance.

Therefore, in order to prevent generation of bubbles in the coolant made to flow-in and to fully fill the inside of the battery cell assembly 100 with the coolant, it is preferred that the inlet 421 is located lower than the center based on the height of the battery cell stack 120, and the outlet 461 is located higher than the center based on the height of the battery cell stack 120.

In the embodiments above, expressions indicating directions such as "front," "rear," "left," "right," "up," and "down" have been used. These expressions are used only to facilitate the description, and may vary, for example, depending on the location of a target object or an observer.

One or more battery cell assemblies according to certain embodiments of the present disclosure described above may be mounted together with various control and protection systems such as a battery management system (BMS), a battery disconnect unit (BDU), and a cooling system, to form a battery pack.

The battery assemblies or the battery pack may be applied to various devices, which include, for example, transportation vehicles such as electric bicycles, electric vehicles, and hybrids, and energy storage systems (ESS). However, without being limited thereto, the battery modules or the battery pack may be applied to various devices using secondary batteries.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

100: battery cell assembly
100a: first sub-assembly
100b: second sub-assembly
110: battery cell
120: battery cell stack
200: frame member
200H: frame hole
205: frame recessed part
301a: first front busbar assembly
302a: first rear busbar assembly
301b: second front busbar assembly
302b: second rear busbar assembly
350a: first terminal busbar assembly
350b: second terminal busbar assembly
340a: first inter-busbar
340b: second inter-busbar
400: sealing assembly
700: insulating plate
700H: opening

## Claims

1. A battery cell assembly comprising:
a sub-assembly including a battery cell stack formed by stacking a plurality of battery cells;
a frame member that houses the sub-assembly;
an inter-busbar that is electrically connected to the battery cells included in the sub-assembly;
a terminal member including one end where a screw thread is formed;
a frame hole that is formed on at least one side surface of the frame member; and
a terminal busbar assembly that covers the frame hole and is connected to the terminal member,
wherein the inter-busbar is formed with an inter-busbar hole, and one end of the terminal member is coupled to the inter-busbar hole through the frame hole.

2. The battery cell assembly according to claim 1,
wherein the terminal busbar assembly comprises,
a terminal busbar that is electrically connected to the terminal member, and
a terminal busbar frame that surrounds at least a part of the terminal busbar and is made of an electrically insulating material,
one end of the terminal busbar is exposed to the outside of the terminal busbar frame, and the other end of the terminal busbar is formed with a terminal busbar hole, and
one end of the terminal member passes through the terminal busbar hole to be coupled to the inter-busbar hole.

3. The battery cell assembly according to claim 2,
wherein the terminal member comprises the other end where a screw thread is formed, and
the other end of the terminal member passes through the terminal busbar hole to be coupled with a nut.

4. The battery cell assembly according to claim 3,
wherein a gasket is located between a nut coupled to the other end of the terminal member and the terminal busbar hole.

5. The battery cell assembly according to claim 1,
wherein at least one side surface of the frame member is formed with a frame recessed part that is recessed toward the inside of the frame member from the outer surface of the frame member,
the frame recessed part is formed with the frame hole, and
the sizes of the frame recessed part and the terminal busbar assembly are equal to each other.

6. The battery cell assembly according to claim 5,
wherein the space between the frame recessed part and the terminal busbar assembly is filled with a sealing member.

7. The battery cell assembly according to claim 1,
wherein the sub-assembly comprises a first sub-assembly including a first battery cell stack and a second sub-assembly including a second battery cell stack,
the inter-busbar comprises a pair of first inter-busbars electrically connected to the battery cells included in the first sub-assembly, and a pair of second inter-busbars electrically connected to the battery cells included in the second sub-assembly,
the terminal members are formed in a plurality of numbers, and are electrically connected to the pair of first inter-busbars and the pair of second inter-busbars, respectively, and
the first inter-busbar and the second inter-busbar are respectively located in a space between the first battery cell stack and the second battery cell stack.

8. The battery cell assembly according to claim 7,
wherein the frame hole comprises a pair of first frame holes located on one side surface of the frame member and a pair of second frame holes located on the other side surface of the frame member,
the terminal busbar assembly comprises a first terminal busbar assembly covering the pair of first frame holes and a second terminal busbar assembly covering the pair of second frame holes,
the first terminal busbar assembly is electrically connected to one of the pair of first inter-busbars and one of the pair of second inter-busbars, and
the second terminal busbar assembly is electrically connected to the other of the pair of first inter-busbars and the other of the pair of second inter-busbars.

9. The battery cell assembly according to claim 1,
comprising an inlet and an outlet for circulating a coolant inside the frame member,
wherein the coolant is flowed into the inside of the frame member through the inlet, and discharged through the outlet.

10. The battery cell assembly according to claim 9,
wherein the sub-assembly comprises a first sub-assembly including a first battery cell stack, and a second sub-assembly including a second battery cell stack,
an insulating plate is disposed between the first sub-assembly and the second sub-assembly, and
the insulating plate is formed with an opening through which the coolant passes.

11. The battery cell assembly according to claim 10,
wherein the inlet and the outlet are located opposite sides to each other in reference to the insulating plate,
the first sub-assembly is located between the inlet and the insulating plate, and
the second sub-assembly is located between the outlet and the insulating plate.

12. The battery cell assembly according to claim 11,
wherein the coolant flowing-in through the inlet passes through the first sub-assembly, the opening of the insulating plate, and the second sub-assembly in sequence to be discharged through the outlet.

13. The battery cell assembly according to claim 10,
further comprising a first sealing assembly and a second sealing assembly that cover opened both sides of the frame member, respectively,
wherein the inlet is coupled to the first sealing assembly, and the outlet is coupled to the second sealing assembly.

14. The battery cell assembly according to claim 13,
wherein the battery cell is a pouch-type battery cell, the battery cell includes electrode leads protruding in both directions, and
when the direction between the electrode leads is defined as a longitudinal direction, the first sealing assembly, the first sub-assembly, the insulating plate, the second sub-assembly, and the second sealing assembly are located in sequence along the longitudinal direction.

15. The battery cell assembly according to claim 9,
wherein the coolant is an insulating oil, and
the coolant is in direct contact with the battery cell stack housed inside the frame member.

16. A battery pack comprising a battery cell assembly according to claim 1.
